(19) Europäisches Patentamt / European Patent Office / Office européen des brevets

(11) EP 2 154 968 B1

(12) EUROPÄISCHE PATENTSCHRIFT

(45) Veröffentlichungstag und Bekanntmachung des Hinweises auf die Patenterteilung:
**27.04.2016 Patentblatt 2016/17**

(21) Anmeldenummer: **08758768.9**

(22) Anmeldetag: **27.05.2008**

(51) Int Cl.:
***A01N 43/56*** *(2006.01)* ***A01N 43/08*** *(2006.01)*
***A01N 37/46*** *(2006.01)* ***A01N 37/50*** *(2006.01)*
***A01N 43/54*** *(2006.01)* ***A01N 43/88*** *(2006.01)*
***A01N 43/40*** *(2006.01)* ***A01N 47/24*** *(2006.01)*
***A01P 3/00*** *(2006.01)*

(86) Internationale Anmeldenummer:
**PCT/EP2008/004181**

(87) Internationale Veröffentlichungsnummer:
**WO 2008/148476 (11.12.2008 Gazette 2008/50)**

(54) **FUNGIZIDE WIRKSTOFFKOMBINATIONEN**
FUNGICIDAL ACTIVE AGENT COMPOUNDS
ASSOCIATIONS DÝAGENTS ACTIFS FONGICIDES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **06.06.2007 EP 07011096**

(43) Veröffentlichungstag der Anmeldung:
**24.02.2010 Patentblatt 2010/08**

(73) Patentinhaber: **Bayer Intellectual Property GmbH**
**40789 Monheim am Rhein (DE)**

(72) Erfinder:
- **SUTY-HEINZE, Anne**
  **40764 Langenfeld (DE)**
- **DAHMEN, Peter**
  **41470 Neuss (DE)**

(74) Vertreter: **BIP Patents**
**c/o Bayer Intellectual Property GmbH**
**Alfred-Nobel-Straße 10**
**40789 Monheim am Rhein (DE)**

(56) Entgegenhaltungen:
**WO-A-98/58544** **WO-A-03/045146**
**WO-A-2005/041653** **WO-A-2007/054469**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 154 968 B1

## Beschreibung

Die vorliegende Erfindung betrifft neue Wirkstoffkombinationen enthaltend die bekannten fungiziden Wirkstoffe *N*-[2-(1,3-Dimethylbutyl)phenyl]-5-fluor-1,3-dimethyl-1*H*-pyrazol-4-carboxamid, Acylalanine und Strobilurine, welche sehr gut zur Bekämpfung von unerwünschten phytopathogenen Pilzen geeignet sind. Die Erfindung betrifft außerdem ein Verfahren zur kurativen oder präventiven Behandlung von phytopathogenen Pilzen auf Pflanzen oder Nutzpflanzen, insbesondere die Behandlung von Saatgut, z.B. Getreidesaatgut, und nicht zuletzt das behandelte Saatgut selbst.

Es ist bereits bekannt, dass *N*-[2-(1,3-Dimethylbutyl)phenyl]-5-fluor-1,3-dimethyl-1*H*-pyrazol-4-carboxamid, Acylalanine (2) und Strobilurine (3) jeweils fungizide Eigenschaften besitzen [vgl. The Pesticide Manual, 13th Edition (2003), Seiten 468f., 632ff. und 1007f]. Die Wirksamkeit dieser Stoffe ist gut, lässt aber in manchen Fällen zu wünschen übrig.

Da sich die ökologischen und ökonomischen Anforderungen an moderne Fungizide laufend erhöhen, beispielsweise was Wirkungsspektrum, Toxizität, Selektivität, Aufwandmenge, Rückstandsbildung und günstige Herstellbarkeit angeht, und außerdem z.B. Probleme mit Resistenzen auftreten können, besteht die ständige Aufgabe, neue Fungizide zu entwickeln, die zumindest in Teilbereichen die genannten Nachteile zu überwinden helfen.

Die vorliegende Erfindung stellt Wirkstoffkombinationen bzw. Mittel zur Verfügung, welche wenigstens in einigen Aspekten die gestellte Aufgabe lösen.

Es wurde nun überraschenderweise gefunden, dass die erfindungsgemäßen Wirkstoffkombinationen bzw. Mittel nicht nur einen additiven Effekt der Wirkung der Einzelkomponenten zeigen, sondern einen synergistischen Effekt aufweisen. Dadurch kann zum einen die übliche Aufwandmenge der Einzelsubstanzen verringert werden. Zum anderen bieten die erfindungsgemäßen Wirkstoffkombinationen auch dann noch einen hohen Grad an Wirkung gegen Phytopathogene, wenn die Einzelverbindungen in solchen Mengen eingesetzt werden, in denen sie selbst keine (ausreichende) Wirkung mehr zeigen. Dies erlaubt grundsätzlich eine Verbreiterung des Wirkungsspektrums einerseits und eine höhere Sicherheit bei der Handhabung andererseits.

Neben der fungiziden synergistischen Wirkung haben die erfindungsgemäßen Wirkstoffkombinationen weitere überraschende Eigenschaften, die man im weiteren Sinn ebenfalls als synergistisch bezeichnen kann, wie z.B.: die Erweiterung des Wirkungsspektrums, z.B. auf resistente Erreger von Pflanzenkrankheiten; geringere Aufwandmengen der Wirkstoffe; ausreichende Schädlingsbekämpfung mit Hilfe der erfindungsgemäßen Wirkstoffkombinationen auch mit solchen Aufwandmengen, bei denen die Einzelwirkstoffe keine oder fast keine Wirkung zeigen; vorteilhaftes Verhalten beim Formulieren oder während der Anwendung, z.B. während des Mahlens, Siebens,

WO2005/041653 offenbart Mischungen von Wirkstoffen umfassend ein Carboxamid und einen anderen Wirkstoff, unter anderem ausgewählt aus Acylalaninen und Strobilurinen. WO03/045146 offenbart Mischungen von Metalaxyl und einem Strobilurin ausgewählt aus Azoxystrobin, Picostrobin und Kresoxim-methyl. WO98/58544 offenbart Mischungen aus bestimmten nit Acylalaninen.

Emulgierens, Lösens oder Ausbringens; verbesserte Lager- bzw. Lichtstabilität; vorteilhaftere Rückstandsbildung; verbessertes toxikologisches oder ökotoxikologisches Verhalten; verbesserte Eigenschaften für die Pflanze, z.B. besseres Wachstum, gesteigerte Ernteerträge, besser ausgebildetes Wurzelsystem, größere Blattfläche, grünere Blätter, stärkere Schösslinge, geringerer Bedarf an Saatgut, geringere Phytotoxizität, Mobilisierung der pflanzeneigenen Abwehr, gute Pflanzenverträglichkeit. So tragen die erfindungsgemäßen Wirkstoffkombinationen bzw. Mittel bei Anwendung deutlich zur Gesunderhaltung junger Pflanzenbestände bei, wodurch beispielsweise die Überwinterungsleistung des behandelten Saatgutes gesteigert sowie die Qualitäts- und Ertragsbildung abgesichert wird. Die erfindungsgemäßen Wirkstoffkombinationen können außerdem zu einer verbesserten systemischen Wirkung beitragen. Auch wenn die Einzelwirkstoffe der Kombination keine ausreichenden systemischen Eigenschaften besitzen, können die erfindungsgemäßen Wirkstoffkombinationen diese Eigenschaft durchaus aufweisen. Ähnlich können die erfindungsgemäßen Wirkstoffkombinationen zu einer erhöhten Persistenz der fungiziden Wirkung führen.

Es wurde nun gefunden, dass Wirkstoffkombinationen enthaltend

(1) *N*-[2-(1,3-Dimethylbutyl)phenyl]-5-fluor-1,3-dimethyl-1*H*-pyrazol-4-carboxamid oder dessen Salze, und
(2) ein Acylalanin ausgewählt aus Metalaxyl und Metalaxyl-M, und
(3) das Strobilurin- Trifloxystrobin sehr gute fungizide Eigenschaften besitzen.

Wenn die Wirkstoffe in den (vom Hauptanspruch definierten) erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden.

Im Allgemeinen entfallen auf 1 Gewichtsteil an Strobilurin (3) 0,005 - 500, bevorzugt 0,01 - 100, besonders bevorzugt 0,05 - 50, ganz besonders bevorzugt 0,1 - 10 Gewichtsteile an Acylalanin (2) und

0,005 - 500, bevorzugt 0,01 - 100, besonders bevorzugt 0,05 - 50, ganz besonders bevorzugt 0,1 - 10 Gewichtsteile an *N*-[2-(1,3-Dimethylbutyl)phenyl]-5-fluor-1,3-dimethyl-1*H*-pyrazol-4-carboxamid. Die Wirkstoffe Strobilurin (3), Acylalanin (2) und *N*-[2-(1,3-Dimethylbtityl)phenyl]-5-fluor-1,3-dimethyl-1*H*-pyrazol-4-carboxamid können gegebenenfalls in Form ihrer Salze vorliegen.

Ebenfalls beschrieben sind Mischungen mit Acylalaninen ausgewählt aus der Gruppe bestehend aus:

(2-1) Benalaxyl (bekannt aus DE-A 29 03 612) der Formel

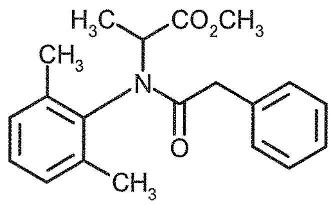

(2-2) Furalaxyl (bekannt aus DE-A 25 13 732) der Formel

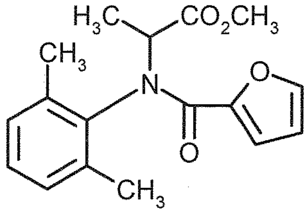

(2-3) Metalaxyl (bekannt aus DE-A 25 15 091) der Formel

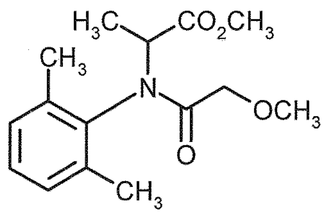

(2-4) Metalaxyl-M (bekannt aus WO 96/01559) der Formel

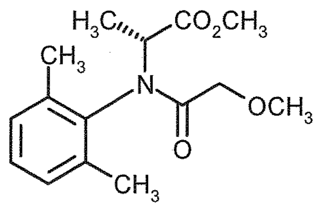

wobei Metalaxyl und Metalaxyl-M besonders bevorzugt sind.

Zusätzliche beschriebene Mischungen mit Strobilurinen (3) sind vorzugsweise ausgewählt aus der Gruppe bestehend aus:

(3-1) Azoxystrobin (bekannt aus EP-A 0 382 375) der Formel

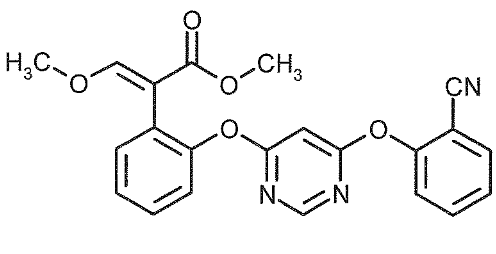

(3-2) Fluoxastrobin (bekannt aus DE-A 196 02 095) der Formel

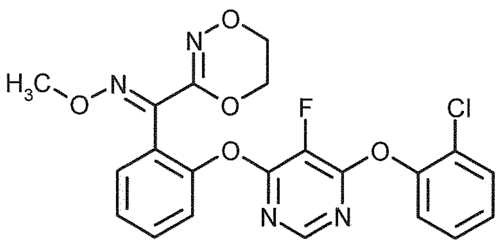

(3-3) die Verbindung (bekannt aus DE-A 196 46 407, EP-B 0 712 396) der Formel

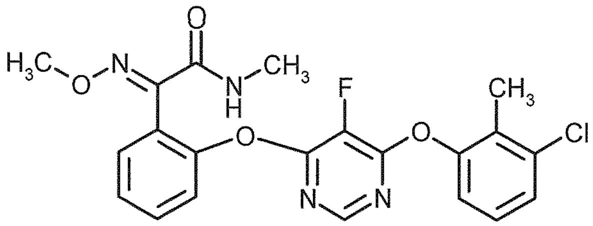

(3-4) Trifloxystrobin (bekannt aus EP-A 0 460 575) der Formel

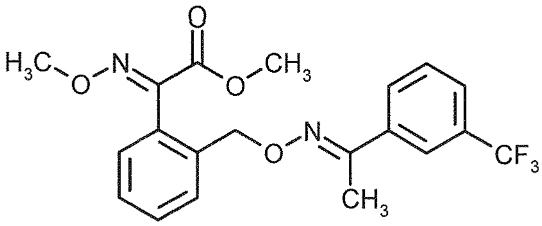

(3-5) die Verbindung (bekannt aus EP-A 0 569 384) der Formel

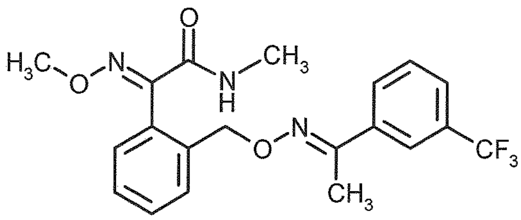

(3-6) die Verbindung (bekannt aus EP-A 0 596 254) der Formel

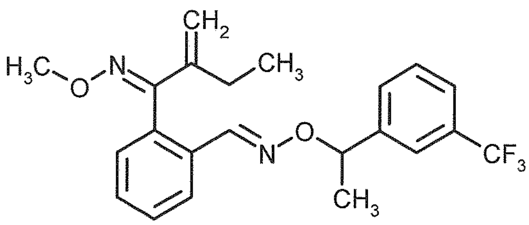

(3-7) Orysastrobin (bekannt aus DE-A 195 39 324) der Formel

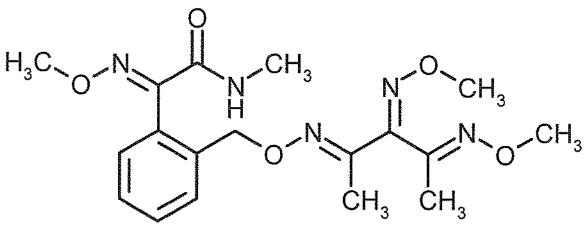

(3-8) die Verbindung (bekannt aus WO 98/23155) der Formel

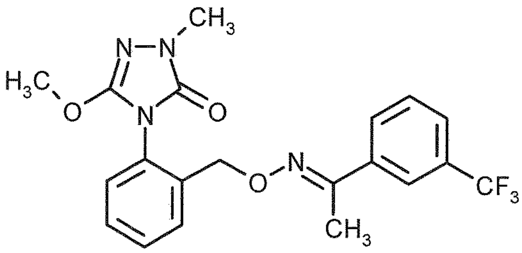

(3-9) Kresoxim-methyl (bekannt aus EP-A 0 253 213) der Formel

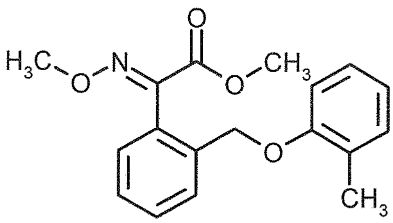

(3-10) Dimoxystrobin (bekannt aus EP-A 0 398 692) der Formel

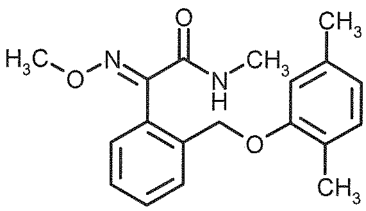

(3-11) Picoxystrobin (bekannt aus EP-A 0 278 595) der Formel

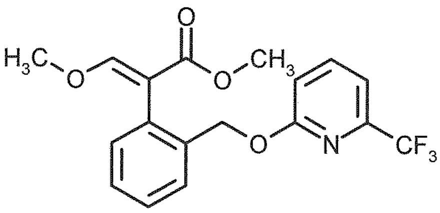

(3-12) Pyraclostrobin (bekannt aus DE-A 44 23 612) der Formel

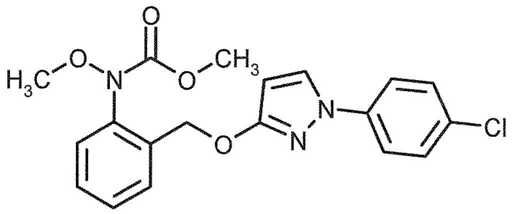

(3-13) Metominostrobin (bekannt aus EP-A 0 398 692) der Formel

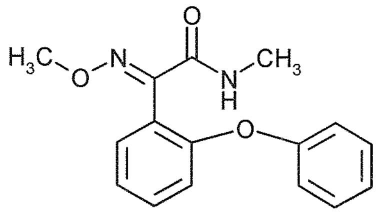

,

wobei Trifloxystrobin oder dessen Salze besonders bevorzugt ist.

Weiterhin beschrieben werden Mischungen, in denen *N*-[2-(1,3-Dimethylbutyl)phenyl]-5-fluor-1,3-dimethyl-1*H*-pyrazol-4-carboxamid mit den folgenden Mischungspartnern (2) und (3) kombiniert wird:

(2-1) Benalaxyl und wenigstens einem Strobilurin (3) ausgewählt aus der Gruppe bestehend aus (3-1) Azoxystrobin, (3-2) Fluoxastrobin, (3-3), (3-4) Trifloxystrobin, (3-5), (3-6), (3-7) Orysastrobin, (3-8), (3-9) Kresoxim-methyl, (3-10) Dimoxystrobin, (3-11) Picoxystrobin, (3-12) Pyraclostrobin, (3-13) Metominostrobin und deren Salze oder Mischungen.

(2-2) Furalaxyl und wenigstens einem Strobilurin (3) ausgewählt aus der Gruppe bestehend aus (3-1) Azoxystrobin, (3-2) Fluoxastrobin, (3-3), (3-4) Trifloxystrobin, (3-5), (3-6), (3-7) Orysastrobin, (3-8), (3-9) Kresoxim-methyl, (3-10) Dimoxystrobin, (3-11) Picoxystrobin, (3-12) Pyraclostrobin, (3-13) Metominostrobin und deren Salze oder Mischungen.

(2-3) Metalaxyl und wenigstens einem Strobilurin (3) ausgewählt aus der Gruppe bestehend aus (3-1) Azoxystrobin, (3-2) Fluoxastrobin, (3-3), (3-4) Trifloxystrobin, (3-5), (3-6), (3-7) Orysastrobin, (3-8), (3-9) Kresoxim-methyl, (3-10) Dimoxystrobin, (3-11) Picoxystrobin, (3-12) Pyraclostrobin, (3-13) Metominostrobin und deren Salze oder Mischungen.

(2-4) Metalaxyl-M und wenigstens einem Strobilurin (3) ausgewählt aus der Gruppe bestehend aus (3-1) Azoxystrobin, (3-2) Fluoxastrobin, (3-3), (3-4) Trifloxystrobin, (3-5), (3-6), (3-7) Orysastrobin, (3-8), (3-9) Kresoxim-methyl, (3-10) Dimoxystrobin, (3-11) Picoxystrobin, (3-12) Pyraclostrobin, (3-13) Metominostrobin und deren Salze oder Mischungen.

Die oben zusätzlich beschriebenen Mischungen gehören nicht zum Anspruchsgegenstand. Erfindungsgemäß bedeutet der Ausdruck "Wirkstoffkombination" verschiedene mögliche Kombinationen der drei im Hauptanspruch genannten Wirkstoffe, wie beispielsweise Fertigmischungen, Tankmischungen (worunter Spritzmischungen verstanden werden, die vor der Anwendung aus den Formulierungen der Einzelwirkstoffe durch Zusammengeben und Verdünnen hergestellt werden) oder Kombinationen hiervon (z.B. wird eine binäre Fertigmischung aus zwei der oben genannten Wirkstoffen mit einer Formulierung der dritten Einzelsubstanz in eine Tankmischung überführt). Erfindungsgemäß können die Einzelwirkstoffe auch sequentiell eingesetzt werden, d.h. einer nach dem anderen, und zwar mit einem vernünftigen zeitlichen Abstand von wenigen Stunden oder Tagen, bei Saatgutbehandlung z.B. auch durch Aufbringen mehrerer Schichten, die unterschiedliche Wirkstoffe enthalten. Vorzugsweise spielt es keine Rolle, in welcher Reihenfolge die einzelnen Wirkstoffe eingesetzt werden können.

Diese Erfindung betrifft weiterhin Mittel, welche die erfmdungsgemäßen Wirkstoffkombinationen enthalten. Vorzugsweise handelt es sich um fungizide Mittel, enthaltend landwirtschaftlich verwendbare Trägerstoffe oder Streckmittel.

Erfindungsgemäß bedeutet Trägerstoff eine natürliche oder synthetische, organische oder anorganische Substanz, mit welchen die Wirkstoffe zur besseren Anwendbarkeit, v.a. zum Aufbringen auf Pflanzen oder Pflanzenteile oder Saatgut, gemischt oder verbunden sind. Der Trägerstoff, welcher fest oder flüssig sein kann, ist im Allgemeinen inert und sollte in der Landwirtschaft verwendbar sein.

Als feste Trägerstoffe kommen infrage: z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und natürliche oder synthetische Silikate, Harze, Wachse, feste Düngemittel, Wasser Alkohole, besonders Butanol, organische Solventien, Mineral- und Pflanzenöle sowie Derivate hiervon. Mischungen solcher Trägerstoffe können ebenfalls verwendet werden. Als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstängel. Als Emulgier- und/oder Schaum erzeugende Mittel kommen infrage: z.B. nichtionogene und anionische Emulgatoren, wie Polyoxyethylen-Fettsäureester, Polyoxyethylen-Fettalkoholether, z.B. Alkylarylpolyglycolether, Alkylsulfonate, Alkylsulfate, Arylsulfonate sowie Eiweißhydrolysate. Als Dispergiermittel kommen infrage: z.B. Lignin-Sulfitablaugen und Methylcellulose.

Als verflüssigte gasförmige Streckmittel oder Trägerstoffe kommen solche Flüssigkeiten infrage, welche bei normaler Temperatur und unter Normaldruck gasförmig sind, z.B. Aerosol-Treibgase, wie Butan, Propan, Stickstoff und Kohlendioxid.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Im Falle der Benutzung von Wasser als Streckmittel können z.B. auch organische Lösungsmittel als Hilfslösungsmittel verwendet werden. Als flüssige Lösungsmittel kommen im Wesentlichen infrage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone, wie Aceton, Methylethylketon, Methylisobutylketon oder Cyclohexanon, stark polare Lösungsmittel wie Dimethylformamid und Dimethylsulfoxid, sowie Wasser.

Die erfindungsgemäßen Mittel können zusätzlich weitere Bestandteile enthalten, wie z.B. oberflächenaktive Stoffe. Als oberflächenaktive Stoffe kommen Emulgiermittel, Dispergiermittel oder Benetzungsmittel mit ionischen oder nicht-ionischen Eigenschaften oder Mischungen dieser oberflächenaktiven Stoffe infrage. Beispiele hierfür sind Salze von Polyacrylsäure, Salze von Lignosulphonsäure, Salze von Phenolsulphonsäure oder Naphthalinsulphonsäure, Polykondensate von Ethylenoxid mit Fettalkoholen oder mit Fettsäuren oder mit Fettaminen, substituierten Phenolen (vorzugsweise Alkylphenole oder Arylphenole), Salze von Sulphobernsteinsäureestern, Taurinderivate (vorzugsweise Alkyltaurate), Phosphorsäureester von polyethoxylierten Alkoholen oder Phenole, Fettsäureester von Polyolen, und Derivate der Verbindungen enthaltend Sulphate, Sulphonate und Phosphate. Die Anwesenheit einer oberflächenaktiven Substanz ist notwendig, wenn einer der Wirkstoff und/oder einer der inerten Trägerstoffe nicht in Wasser löslich ist und wenn die Anwendung in Wasser erfolgt. Der Anteil an oberflächenaktiven Stoffen liegt zwischen 5 und 40 Gewichtsprozent des erfindungsgemäßen Mittels.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Gegebenenfalls können auch andere zusätzliche Komponenten enthalten sein, z.B. schützende Kolloide, Bindemittel, Klebstoffe, Verdicker, thixotrope Stoffe, Penetrationsförderer, Stabilisatoren, Sequestiermittel, Komplexbildner. Im Allgemeinen können die Wirkstoffe mit jedem festen oder flüssigen Additiv, welches für Formulierungszwecke gewöhnlich verwendet wird, kombiniert werden.

Im Allgemeinen enthalten die erfindungsgemäßen Mittel zwischen 0,05 und 99 Gewichtsprozent von der erfindungsgemäßen Wirkstoffkombination, bevorzugt zwischen 5 und 60 Gewichtsprozent, besonders bevorzugt zwischen 10 und 50 Gewichtsprozent, hervorgehoben 20 Gewichtsprozent.

Die erfindungsgemäßen Wirkstoffkombinationen bzw. Mittel können als solche oder in Abhängigkeit von ihren jeweiligen physikalischen und/oder chemischen Eigenschaften in Form ihrer Formulierungen oder den daraus bereiteten Anwendungsformen, wie Aerosole, Kapselsuspensionen, Kaltnebelkonzentrate, Heißnebelkonzentrate, verkapselte Granulate, Feingranulate, fließfähige Konzentrate für die Behandlung von Saatgut, gebrauchsfertige Lösungen, verstäubbare Pulver, emulgierbare Konzentrate, Öl-in-Wasser-Emulsionen, Wasser-in-Öl-Emulsionen, Makrogranulate, Mikrogranulate, Öl dispergierbare Pulver, Öl mischbare fließfähige Konzentrate, Öl mischbare Flüssigkeiten, Schäume, Pasten, Pestizid ummanteltes Saatgut, Suspensionskonzentrate, Suspensions-Emulsions-Konzentrate, lösliche Konzentrate, Suspensionen, Spritzpulver, lösliche Pulver, Stäubemittel und Granulate, wasserlösliche Granulate oder Tabletten, wasserlösliche Pulver für Saatgutbehandlung, benetzbare Pulver, Wirkstoff-imprägnierte Natur- und synthetische

Stoffe sowie Feinstverkapselungen in polymeren Stoffen und in Hüllmassen für Saatgut, sowie ULV-Kalt- und Warmnebel-Formulierungen eingesetzt werden.

Die genannten Formulierungen können in an sich bekannter Weise hergestellt werden, z.B. durch Vermischen der Wirkstoffe bzw. der Wirkstoffkombinationen mit mindestens einem Lösungs- bzw. Verdünnungsmittel, Emulgator, Dispergier- und/oder Binde- oder Fixiermittels, Wasser-Repellent, gegebenenfalls Sikkative und UV-Stabilisatoren und gegebenenfalls Farbstoffen und Pigmenten sowie weiteren Verarbeitungshilfsmitteln.

Die erfindungsgemäße Behandlung der Pflanzen und Pflanzenteile mit den Wirkstoffkombinationen bzw. Mitteln erfolgt direkt oder durch Einwirkung auf deren Umgebung, Lebensraum oder Lagerraum nach den üblichen Behandlungsmethoden, z.B. durch Tauchen, (Ver-)Spritzen, (Ver-)Sprühen, Berieseln, Verdampfen, Zerstäuben, Vernebeln, (Ver-)Streuen, Verschäumen, Bestreichen, Verstreichen, Gießen (drenchen), Tröpfchenbewässerung und bei Vermehrungsmaterial, insbesondere bei Samen, weiterhin durch Trockenbeizen, Nassbeizen, Schlämmbeizen, Inkrustieren, ein- oder mehrschichtiges Umhüllen usw.

Die erfindungsgemäßen Mittel umfassen nicht nur Mittel, welche bereits anwendungsfertig sind und mit einer geeigneten Apparatur auf die Pflanze oder das Saatgut ausgebracht werden können, sondern kommerzielle Konzentrate, welche vor Gebrauch mit Wasser verdünnt werden müssen.

Die erfindungsgemäßen Wirkstoffkombinationen können in handelsüblichen Formulierungen sowie in den aus diesen Formulierungen bereiteten Anwendungsformen in Mischung mit anderen Wirkstoffen, wie Insektiziden, Lockstoffen, Sterilantien, Bakteriziden, Akariziden, Nematiziden, Fungiziden, wachstumsregulierenden Stoffen oder Herbiziden vorliegen.

Die erfindungsgemäßen Wirkstoffkombinationen bzw. Mittel weisen eine starke mikrobizide Wirkung auf und können zur Bekämpfung von unerwünschten Mikroorganismen, wie Pilzen und Bakterien, im Pflanzenschutz und im Materialschutz eingesetzt werden.

Fungizide lassen sich im Pflanzenschutz zur Bekämpfung von Plasmodiophoromycetes, Oomycetes, Chytridiomycetes, Zygomycetes, Ascomycetes, Basidiomycetes und Deuteromycetes einsetzen.

Bakterizide lassen sich im Pflanzenschutz zur Bekämpfung von Pseudomonadaceae, Rhizobiaceae, Enterobacteriaceae, Corynebacteriaceae und Streptomycetaceae einsetzen.

Die erfmdungsgemäßen fungiziden Mittel können zur Bekämpfung von phytopathogenen Pilzen kurativ oder protektiv eingesetzt werden. Die Erfindung betrifft daher auch kurative und protektive Verfahren zum Bekämpfen von phytopathogenen Pilzen durch die Verwendung der erfindungsgemäßen Wirkstoffkombinationen oder Mittel, welche auf das Saatgut, die Pflanze oder Pflanzenteile, die Früchten oder den Boden, in welchem die Pflanzen wachsen, ausgebracht wird.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Als Pflanzen, welche erfindungsgemäß behandelt werden können, seien folgende erwähnt: Baumwolle, Flachs, Wein, Obst, Gemüse, wie *Rosaceae sp.* (beispielsweise Kernfrüchte wie Apfel und Birne, aber auch Steinfrüchte wie Aprikosen, Kirschen, Mandeln und Pfirsiche und Beerenfrüchte wie Erdbeeren), *Ribesioidae sp., Juglandaceae sp., Betulaceae sp., Anacardiaceae sp., Fagaceae sp., Moraceae sp., Oleaceae sp., Actinidaceae sp., Lauraceae sp., Musaceae sp.* (beispielsweise Bananenbäume und -plantagen), *Rubiaceae sp.* (beispielsweise Kaffee), *Theaceae sp., Sterculiceae sp., Rutaceae sp.* (beispielsweise Zitronen, Organen und Grapefruit); *Solanaceae sp.* (beispielsweise Tomaten), *Liliaceae sp., Asteraceae sp.* (beispielsweise Salat), *Umbelliferae sp., Cruciferae sp., Chenopodiaceae sp., Cucurbitaceae sp.* (beispielsweise Gurke), *Alliaceae sp.* (beispielsweise Lauch, Zwiebel), *Papilionaceae sp.* (beispielsweise Erbsen); Hauptnutzpflanzen, wie *Gramineae sp.* (beispielsweise Mais, Rasen, Getreide wie Weizen, Roggen, Reis, Gerste, Hafer, Hirse und Triticale), *Asteraceae sp.* (beispielsweise Sonnenblume), *Brassicaceae sp.* (beispielsweise Weißkohl, Rotkohl, Brokkoli, Blumenkohl, Rosenkohl, Pak Choi, Kohlrabi, Radieschen sowie Raps, Canola, Senf, Meerrettich und Kresse), *Fabacae sp.* (beispielsweise Bohne, Erbse, Linse, Erdnüsse), *Papilionaceae sp.* (beispielsweise Sojabohne), *Solanaceae sp.* (beispielsweise Kartoffeln), *Chenopodiaceae sp.* (beispielsweise Zuckerrübe, Futterrübe, Mangold, Rote Rübe); Nutzpflanzen und Zierpflanzen in Garten und Wald; sowie jeweils genetisch modifizierte Arten dieser Pflanzen.

Das erfindungsgemäße Verfahren zum Bekämpfen von phytopathogenen Pilzen kann auch zur Behandlung von genetisch veränderten Organismen, z.B. Pflanzen oder Samen, verwendet werden. Genetisch veränderte Pflanzen

sind solche, in deren Genom ein bestimmtes heterologes Gen, welches ein bestimmtes Protein codiert, stabil integriert wurde. "Heterologes Gen" meint dabei ein Gen, welches der transformierten Pflanze neue agronomische Eigenschaften verleiht, oder ein Gen, welches die agronomische Qualität der modifizierten Pflanze verbessert.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltene Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetically Modified Organisms) und deren Teile behandelt. Der Begriff "Teile" bzw. "Teile von Pflanzen" oder "Pflanzenteile" wurde oben erläutert. Besonders bevorzugt werden erfindungsgemäß Pflanzen der jeweils handelsüblichen oder in Gebrauch befindlichen Pflanzensorten behandelt.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Gemüse (Tomate), Mais, Soja, Kartoffel, Baumwolle, Raps, Canola, sowie Obstpflanzen (mit den Früchten Äpfel, Birnen, Zitrusfrüchten und Weintrauben) erwähnt, wobei Reis, Mais, Soja, Kartoffel, Baumwolle, Tomate, Canola und Raps besonders hervorgehoben werden.

Besonders bevorzugt ist die Mischung *N*-[2-(1,3-Dimethylbutyl)phenyl]-5-fluor-1,3-dimethyl-1*H*-pyrazol-4-carboxamid, Trifloxystrobin und Metalaxyl für folgende Kulturen: Getreide, Mais, Soja, Raps, Canola, Gemüse (insb. Tomate), Kartoffel, Baumwolle, Sonnenblume, Hülsenfrüchte (Erbse, Bohne, Linse...).

Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus Bacillus thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die erfindungsgemäßen Wirkstoffkombinationen können außerdem im Materialschutz zum Schutz von technischen Materialien vor unerwünschten Pilzen eingesetzt werden. Technische Materialien sind z.B. Papier, Teppiche, Gebäude, Kühl- und Heizsysteme, Wandbeläge, Belüftungs- und Klimaanlagen. Die erfindungsgemäßen Wirkstoffkombinationen können nachteilige Effekte wie Vermodern, Verfall, Ver-, Entfärbung oder Verschimmeln verhindern.

Das erfindungsgemäße Verfahren zum Bekämpfen von unerwünschten Pilzen kann auch zum Schutz von so genannte Storage Goods verwendet werden. Unter "Storage Goods" werden dabei natürliche Substanzen pflanzlichen

oder tierischen Ursprungs oder deren Verarbeitungsprodukte, welche der Natur entnommen wurden und für die Langzeitschutz gewünscht ist, verstanden. Storage Goods pflanzlichen Ursprungs, wie z.B. Pflanzen oder Pflanzenteile, wie Stiele, Blätter, Knollen, Samen, Früchte, Körner, können in frisch geerntetem Zustand oder nach Verarbeitung durch (Vor-) Trocknen, Befeuchten, Zerkleinern, Mahlen, Pressen oder Rösten, geschützt werden. Storage Goods umfasst auch Nutzholz, sei es unverarbeitet, wie Bauholz, Stromleitungsmasten und Schranken, oder in Form fertiger Produkte, wie Möbel. Storage Goods tierischen Ursprungs sind beispielsweise Felle, Leder, Pelze und Haare. Die erfindungsgemäßen Wirkstoffkombinationen können nachteilige Effekte wie Vermodern, Verfall, Ver-, Entfärbung oder Verschimmeln verhindern.

Beispielhaft, aber nicht begrenzend, seien einige Erreger von pilzlichen oder bakteriellen Erkrankungen, die erfindungsgemäß behandelt werden können, genannt:

Erkrankungen, hervorgerufen durch Erreger des Echten Mehltaus wie z.B.
Blumeria-Arten, wie beispielsweise Blumeria graminis;
Podosphaera-Arten, wie beispielsweise Podosphaera leucotricha;
Sphaerotheca-Arten, wie beispielsweise Sphaerotheca fuliginea;
Uncinula-Arten, wie beispielsweise Uncinula necator;
Erkrankungen, hervorgerufen durch Erreger von Rostkrankheiten wie z.B.
Gymnosporangium-Arten, wie beispielsweise Gymnosporangium sabinae
Hemileia-Arten, wie beispielsweise Hemileia vastatrix;
Phakopsora-Arten, wie beispielsweise Phakopsora pachyrhizi und Phakopsora meibomiae;
Puccinia-Arten, wie beispielsweise Puccinia recondita oder Puccinia triticina;
Uromyces-Arten, wie beispielsweise Uromyces appendiculatus;
Erkrankungen, hervorgerufen durch Erreger der Gruppe der Oomyceten wie z.B.
Bremia-Arten, wie beispielsweise Bremia lactucae;
Peronospora-Arten, wie beispielsweise Peronospora pisi oder P. brassicae;
Phytophthora-Arten, wie beispielsweise Phytophthora infestans;
Plasmopara-Arten, wie beispielsweise Plasmopara viticola;
Pseudoperonospora-Arten, wie beispielsweise Pseudoperonospora humuli oder Pseudoperonospora cubensis;
Pythium-Arten, wie beispielsweise Pythium ultimum;
Blattfleckenkrankheiten und Blattwelken, hervorgerufen durch z.B.
Alternaria-Arten, wie beispielsweise Alternaria solani;
Cercospora-Arten, wie beispielsweise Cercospora beticola;
Cladiosporum-Arten, wie beispielsweise Cladiosporium cucumerinum;
Cochliobolus-Arten, wie beispielsweise Cochliobolus sativus
(Konidienform: Drechslera, Syn: Helminthosporium);
Colletotrichum-Arten, wie beispielsweise Colletotrichum lindemuthianum;
Cycloconium-Arten, wie beispielsweise Cycloconium oleaginum;
Diaporthe-Arten, wie beispielsweise Diaporthe citri;
Elsinoe-Arten, wie beispielsweise Elsinoe fawcettii;
Gloeosporium-Arten, wie beispielsweise Gloeosporium laeticolor;
Glomerella-Arten, wie beispielsweise Glomerella cingulata;
Guignardia-Arten, wie beispielsweise Guignardia bidwelli;
Leptosphaeria-Arten, wie beispielsweise Leptosphaeria maculans;
Magnaporthe-Arten, wie beispielsweise Magnaporthe grisea;
Mycosphaerella-Arten, wie beispielsweise Mycosphaerella grammicola und M. fijiensis;
Phaeosphaeria-Arten, wie beispielsweise Phaeosphaeria nodorum;
Pyrenophora-Arten, wie beispielsweise Pyrenophora teres;
Ramularia-Arten, wie beispielsweise Ramularia collo-cygni;
Rhynchosporium-Arten, wie beispielsweise Rhynchosporium secalis;
Septoria-Arten, wie beispielsweise Septoria apii;
Typhula-Arten, wie beispielsweise Typhula incarnata;
Venturia-Arten, wie beispielsweise Venturia inaequalis;
Wurzel- und Stängelkrankheiten, hervorgerufen durch z.B.
Corticium-Arten, wie beispielsweise Corticium graminearum;
Fusarium-Arten, wie beispielsweise Fusarium oxysporum;
Gaeumannomyces-Arten, wie beispielsweise Gaeumannomyces graminis;
Rhizoctonia-Arten, wie beispielsweise Rhizoctonia solani;
Tapesia-Arten, wie beispielsweise Tapesia acuformis;

Thielaviopsis-Arten, wie beispielsweise Thielaviopsis basicola;
Ahren- und Rispenerkrankungen (inklusive Maiskolben), hervorgerufen durch z.B.
Alternaria-Arten, wie beispielsweise Alternaria spp.;
Aspergillus-Arten, wie beispielsweise Aspergillus flavus;
Cladosporium-Arten, wie beispielsweise Cladosporium cladosporioides;
Claviceps-Arten, wie beispielsweise Claviceps purpurea;
Fusarium-Arten, wie beispielsweise Fusarium culmorum;
Gibberella-Arten, wie beispielsweise Gibberella zeae;
Monographella-Arten, wie beispielsweise Monographella nivalis;
Erkrankungen, hervorgerufen durch Brandpilze wie z.B.
Sphacelotheca-Arten, wie beispielsweise Sphacelotheca reiliana;
Tilletia-Arten, wie beispielsweise Tilletia caries;
Urocystis-Arten, wie beispielsweise Urocystis occulta;
Ustilago-Arten, wie beispielsweise Ustilago nuda;
Fruchtfäule hervorgerufen durch z.B.
Aspergillus-Arten, wie beispielsweise Aspergillus flavus;
Botrytis-Arten, wie beispielsweise Botrytis cinerea;
Penicillium-Arten, wie beispielsweise Penicillium expansum und P. purpurogenum;
Sclerotinia-Arten, wie beispielsweise Sclerotinia sclerotiorum;
Verticilium-Arten, wie beispielsweise Verticilium alboatrum;
Samen- und bodenbürtige Fäulen und Welken, sowie Sämlingserkrankungen, hervorgerufen durch z.B.
Alternaria-Arten, wie beispielsweise Alternaria brassicicola
Aphanomyces-Arten, wie beispielsweise Aphanomyces euteiches
Ascochyta-Arten, wie beispielsweise Ascochyta lentis
Aspergillus-Arten, wie beispielsweise Aspergillus flavus
Cladosporium-Arten, wie beispielsweise Cladosporium herbarum
Cochliobolus-Arten, wie beispielsweise Cochliobolus sativus
(Konidienform: Drechslera, Bipolaris Syn: Helminthosporium);
Colletotrichum-Arten, wie beispielsweise Colletotrichum coccodes;
Fusarium-Arten, wie beispielsweise Fusarium culmorum;
Gibberella-Arten, wie beispielsweise Gibberella zeae;
Macrophomina-Arten, wie beispielsweise Macrophomina phaseolina
Monographella-Arten, wie beispielsweise Monographella nivalis;
Penicillium-Arten, wie beispielsweise Penicillium expansum
Phaeosphaeria-Arten, wie beispielsweise Phaeosphaeria nodorum;
Phoma-Arten, wie beispielsweise Phoma lingam
Phomopsis-Arten, wie beispielsweise Phomopsis sojae;
Phytophthora Arten, wie beispielsweise Phytophthora cactorum;
Pyrenophora-Arten, wie beispielsweise Pyrenophora graminea
Pyricularia-Arten, wie beispielsweise Pyricularia oryzae;
Pythium-Arten, wie beispielsweise Pythium ultimum;
Rhizoctonia-Arten, wie beispielsweise Rhizoctonia solani;
Rhizopus-Arten, wie beispielsweise Rhizopus oryzae
Sclerotium-Arten, wie beispielsweise Sclerotium rolfsii;
Septoria-Arten, wie beispielsweise Septoria nodorum;
Typhula-Arten, wie beispielsweise Typhula incarnata;
Verticillium-Arten, wie beispielsweise Verticillium dahliae
Krebserkrankungen, Gallen und Hexenbesen, hervorgerufen durch z.B.
Nectria-Arten, wie beispielsweise Nectria galligena;
Welkeerkrankungen hervorgerufen durch z.B.
Monilinia-Arten, wie beispielsweise Monilinia laxa;
Deformationen von Blättern, Blüten und Früchten, hervorgerufen durch z.B.
Taphrina-Arten, wie beispielsweise Taphrina deformans;
Degenerationserkrankungen holziger Pflanzen, hervorgerufen durch z.B.
Esca-Arten, wie beispielsweise Phaemoniella clamydospora und Phaeoacremonium aleophilum und Fomitiporia mediterranea;
Blüten- und Samenerkrankungen, hervorgerufen durch z.B.
Botrytis-Arten, wie beispielsweise Botrytis cinerea;

Erkrankungen von Pflanzenknollen, hervorgerufen durch z.B.
Rhizoctonia-Arten, wie beispielsweise Rhizoctonia solani;
Helminthosporium-Arten, wie beispielsweise Helminthosporium solani;
Erkrankungen, hervorgerufen durch bakterielle Erreger wie z.B.
Xanthomonas-Arten, wie beispielsweise Xanthomonas campestris pv. oryzae;
Pseudomonas-Arten, wie beispielsweise Pseudomonas syringae pv. lachrymans;
Erwinia-Arten, wie beispielsweise Erwinia amylovora.

Bevorzugt können die folgenden Krankheiten von Soja-Bohnen bekämpft werden:

Pilzkrankheiten an Blättern, Stängeln, Schoten und Samen verursacht durch z.B.

Alternaria leaf spot (Alternaria spec. atrans tenuissima), Anthracnose (Colletotrichum gloeosporoides dematium var. truncatum), Brown spot (Septoria glycines), Cercospora leaf spot and blight (Cercospora kikuchii), Choanephora leaf blight (Choanephora infundibulifera trispora (Syn.)), Dactuliophora leaf spot (Dactuliophora glycines), Downy Mildew (Peronospora manshurica), Drechslera blight (Drechslera glycini), Frogeye Leaf spot (Cercospora sojina), Leptosphaerulina Leaf Spot (Leptosphaerulina trifolii), Phyllostica Leaf Spot (Phyllosticta sojaecola), Pod and Stern Blight (Phomopsis sojae), Powdery Mildew (Microsphaera diffusa), Pyrenochaeta Leaf Spot (Pyrenochaeta glycines), Rhizoctonia Aerial, Foliage, and Web Blight (Rhizoctonia solani), Rust (Phakopsora pachyrhizi, Phakopsora meibomiae), Scab (Sphaceloma glycines), Stemphylium Leaf Blight (Stemphylium botryosum), Target Spot (Corynespora cassiicola).

Pilzkrankheiten an Wurzeln und der Stängelbasis verursacht durch z.B.

Black Root Rot (Calonectria crotalariae), Charcoal Rot (Macrophomina phaseolina), Fusarium Blight or Wilt, Root Rot, and Pod and Collar Rot (Fusarium oxysporum, Fusarium orthoceras, Fusarium semitectum, Fusarium equiseti), Mycoleptodiscus Root Rot (Mycoleptodiscus terrestris), Neocosmospora (Neocosmopspora vasinfecta), Pod and Stem Blight (Diaporthe phaseolorum), Stem Canker (Diaporthe phaseolorum var. caulivora), Phytophthora Rot (Phytophthora megasperma), Brown Stem Rot (Phialophora gregata), Pythium Rot (Pythium aphanidermatum, Pythium irregulare, Pythium debaryanum, Pythium myriotylum, Pythium ultimum), Rhizoctonia Root Rot, Stem Decay, and Damping-Off (Rhizoctonia solani), Sclerotinia Stem Decay (Sclerotinia sclerotiorum), Sclerotinia Southern Blight (Sclerotinia rolfsii), Thielaviopsis Root Rot (Thielaviopsis basicola).

Die Aufwandmenge der erfindungsgemäßen Wirkstoffkombinationen beträgt

- bei der Behandlung von Blättern: von 0,1 bis 10 000 g/ha, bevorzugt von 10 bis 1 000 g/ha, besonders bevorzugt von 50 bis 300g/ha (bei Anwendung durch Gießen oder Tropfen kann die Aufwandmenge sogar verringert werden, vor allem wenn inerte Substrate wie Steinwolle oder Perlit verwendet werden);

- bei der Saatgutbehandlung: von 0,01 bis 200 g pro 100 kg Saatgut, bevorzugt von 0,1 bis 150 g pro 100 kg Saatgut, besonders bevorzugt von 0,5 bis 25 g pro 100 kg Saatgut;

- bei der Bodenbehandlung: von 0,1 bis 10 000 g/ha, bevorzugt von 1 bis 5 000 g/ha.

Diese Aufwandmengen seien nur beispielhaft und nicht limitierend im Sinne der Erfindung genannt.

Die erfindungsgemäßen Wirkstoffkombinationen bzw. Mittel können also eingesetzt werden, um Pflanzen innerhalb eines gewissen Zeitraumes nach der Behandlung gegen den Befall durch die genannten Schaderreger zu schützen. Der Zeitraum, innerhalb dessen Schutz herbeigeführt wird, erstreckt sich im Allgemeinen auf 1 bis 28 Tage, vorzugsweise 1 bis 14 Tage nach der Behandlung der Pflanzen mit den Wirkstoffen bzw. auf bis zu 200 Tage nach einer Saatgutbehandlung.

Die erfindungsgemäßen Wirkstoffkombinationen bzw. Mittel können auch zur Herstellung eines Arzneimittels für die kurative bzw. protektive Behandlung von Menschen oder Tieren gegen pilzliche Erkrankungen, wie Mykosen, Dermatosen, Trichophyton-Krankheiten und Candidasen oder durch Aspergillus spp., wie A. fumigatus, ausgelöste Krankheiten verwendet werden.

Darüber hinaus kann durch die erfindungsgemäße Behandlung der Mykotoxingehalt im Erntegut und den daraus hergestellten Nahrungs- und Futtermitteln verringert werden. Besonders, aber nicht ausschließlich sind hierbei folgende Mykotoxine zu nennen: Deoxynivalenol (DON), Nivalenol, 15-Ac-DON, 3-Ac-DON, T2- und HT2- Toxin, Fumonisine, Zearalenon, Moniliformin, Fusarin, Diaceotoxyscirpenol (DAS), Beauvericin, Enniatin, Fusaroproliferin, Fusarenol, Ochratoxine, Patulin, Mutterkornalkaloide und Aflatoxine, die beispielsweise von den folgenden Pilzen verursacht werden können: Fusarium spec., wie Fusarium acuminatum, F. avenaceum, F. crookwellense, F. culmorum, F. graminearum (Gibberella zeae), F. equiseti, F. fujikoroi, F. musarum, F. oxysporum, F. proliferatum, F. poae, F. pseudograminearum, F. sambucinum, F. scirpi, F. semitectum, F. solani, F. sporotrichoides, F. langsethiae, F. subglutinans, F.

tricinctum, F. verticillioides u.a. sowie auch von Aspergillus spec., Penicillium spec., Claviceps purpurea, Stachybotrys spec. u.a.

Die Erfindung umfasst weiterhin ein Verfahren zur Behandlung von Saatgut, wobei die einzelnen Wirkstoffe gleichzeitig auf das Saatgut aufgebracht werden. Außerdem umfasst die Erfindung ein Verfahren zur Behandlung von Saatgut, wobei die einzelnen Wirkstoffe jeweils nacheinander auf dem Saatgut aufgebracht werden. Außerdem umfasst die Erfindung ein Verfahren zur Behandlung von Saatgut, wobei zunächst ein einzelner Wirkstoff gefolgt von einer binären Mischung der beiden anderen Wirkstoffe aufgebracht wird. Alternativ kann auch zuerst eine binäre Mischung gefolgt von dem verbleibenden Einzelwirkstoff auf dem Saatgut aufgebracht werden. Bei separatem Auftragen von Wirkstoffen und/oder Einzelwirkstoffen und binären Mischungen erfolgt dieses vorzugsweise in verschiedenen Schichten. Diese Schichten können zusätzlich durch Schichten ohne Wirkstoff getrennt sein.

Die Erfindung betrifft weiterhin Saatgut, welches gemäß einem der im vorherigen Absatz beschriebenen Verfahren behandelt wurde.

Die erfindungsgemäßen Wirkstoffkombinationen bzw. Mittel sind speziell geeignet für die Behandlung von Saatgut. Ein großer Teil des durch Schadorganismen hervorgerufenen Schadens an Kulturpflanzen wird durch den Befall des Saatguts während der Lagerung oder nach der Aussaat sowie während und nach der Keimung der Pflanze ausgelöst. Diese Phase ist besonders kritisch, weil die Wurzeln und Schösslinge der wachsenden Pflanze besonders empfindlich sind und auch nur eine kleine Schädigung zum Tod der Pflanze führen kann. Es besteht daher ein großes Interesse daran, das Saatgut und die keimende Pflanze durch Einsatz geeigneter Mittel zu schützen.

Die Bekämpfung von phytopathogenen Pilzen durch die Behandlung des Saatguts von Pflanzen ist seit langem bekannt und ist Gegenstand ständiger Verbesserungen. Dennoch ergeben sich bei der Behandlung von Saatgut eine Reihe von Problemen, die nicht immer zufrieden stellend gelöst werden können. So ist es erstrebenswert, Verfahren zum Schutz des Saatguts und der keimenden Pflanze zu entwickeln, die das zusätzliche Ausbringen von Pflanzenschutzmitteln nach der Saat oder nach dem Auflaufen der Pflanzen überflüssig machen oder zumindest deutlich verringern. Es ist weiterhin erstrebenswert, die Menge des eingesetzten Wirkstoffs dahingehend zu optimieren, dass das Saatgut und die keimende Pflanze vor dem Befall durch phytopathogene Pilze bestmöglich geschützt wird, ohne jedoch die Pflanze selbst durch den eingesetzten Wirkstoff zu schädigen. Insbesondere sollten Verfahren zur Behandlung von Saatgut auch die intrinsischen fungiziden Eigenschaften transgener Pflanzen einbeziehen, um einen optimalen Schutz des Saatguts und der keimenden Pflanze bei einem minimalen Aufwand an Pflanzenschutzmitteln zu erreichen.

Die vorliegende Erfindung bezieht sich daher insbesondere auch auf ein Verfahren zum Schutz von Saatgut und keimenden Pflanzen vor dem Befall von phytopathogenen Pilzen, indem das Saatgut mit einem erfmdungsgemäßen Mittel behandelt wird. Die Erfindung bezieht sich ebenfalls auf die Verwendung der erfmdungsgemäßen Mittel zur Behandlung von Saatgut zum Schutz des Saatguts und der keimenden Pflanze vor phytopathogenen Pilzen. Weiterhin bezieht sich die Erfindung auf Saatgut, welches zum Schutz vor phytopathogenen Pilzen mit einem erfmdungsgemäßen Mittel behandelt wurde.

Die Bekämpfung von phytopathogenen Pilzen, die Pflanzen nach dem Auflaufen schädigen, erfolgt in erster Linie durch die Behandlung des Bodens und der oberirdischen Pflanzenteile mit Pflanzenschutzmitteln. Aufgrund der Bedenken hinsichtlich eines möglichen Einflusses der Pflanzenschutzmittel auf die Umwelt und die Gesundheit von Menschen und Tieren gibt es Anstrengungen, die Menge der ausgebrachten Wirkstoffe zu vermindern.

Einer der Vorteile der vorliegenden Erfindung ist es, dass aufgrund der besonderen systemischen Eigenschaften der erfindungsgemäßen Mittel die Behandlung des Saatguts mit diesen Mitteln nicht nur das Saatgut selbst, sondern auch die daraus hervorgehenden Pflanzen nach dem Auflaufen vor phytopathogenen Pilzen schützt. Auf diese Weise kann die unmittelbare Behandlung der Kultur zum Zeitpunkt der Aussaat oder kurz danach entfallen.

Ebenso ist es als vorteilhaft anzusehen, dass die erfindungsgemäßen Mischungen insbesondere auch bei transgenem Saatgut eingesetzt werden können, wobei die aus diesem Saatgut wachsende Pflanze in der Lage ist, ein Protein zu exprimieren, welches gegen Schädlinge wirkt. Durch die Behandlung solchen Saatguts mit den erfindungsgemäßen Wirkstoffkombinationen bzw. Mitteln können bereits durch die Expression des beispielsweise insektiziden Proteins bestimmte Schädlinge bekämpft werden. Überraschenderweise kann dabei ein weitere synergistischer Effekt beobachtet werden, welcher zusätzlich die Effektivität zum Schutz gegen den Schädlingsbefall vergrößert.

Die erfmdungsgemäßen Mittel eignen sich zum Schutz von Saatgut jeglicher Pflanzensorte, die in der Landwirtschaft, im Gewächshaus, in Forsten oder im Garten- und Weinbau eingesetzt wird. Insbesondere handelt es sich dabei um Saatgut von Mais, Erdnuss, Raps, Canola, Mohn, Olive, Kokosnuss, Kakao, Soja, Rübe (z.B. Zuckerrübe und Futterrübe), Reis, Hirse, Weizen, Gerste, Roggen, Hafer, Baumwolle, Kartoffeln, Sonnenblume, Zuckerrohr, Tabak, Bohne, Kaffee, Gemüse (wie Tomate, Gurke, Zwiebeln und Salat), Hülsenfrüchte (Bohne, Erbse, Linse), Rasen und Zierpflanzen.

Wie schon beschrieben, ist die Behandlung von transgenem Saatgut mit den erfindungsgemäßen Wirkstoffkombinationen bzw. Mitteln von besonderer Bedeutung. Dies betrifft das Saatgut von Pflanzen, die wenigstens ein heterologes Gen enthalten, das die Expression eines Polypeptids oder Proteins mit insektiziden Eigenschaften ermöglicht. Das heterologe Gen in transgenem Saatgut kann z.B. aus Mikroorganismen der Arten Bacillus, Rhizobium, Pseudomonas, Serratia, Trichoderma, Clavibacter, Glomus or Gliocladium stammen. Bevorzugt stammt dieses heterologe Gen aus Bacillus sp., wobei das Genprodukt eine Wirkung gegen den Maiszünsler (European com borer) und/oder Western Com Rootworm besitzt. Besonders bevorzugt stammt das heterologe Gen aus Bacillus thuringiensis.

Im Rahmen der vorliegenden Erfindung werden die erfindungsgemäßen Wirkstoffkombinationen bzw. Mittel alleine oder in einer geeigneten Formulierung auf das Saatgut aufgebracht. Vorzugsweise wird das Saatgut in einem Zustand behandelt, in dem er so stabil ist, dass keine Schäden bei der Behandlung auftreten. Im Allgemeinen kann die Behandlung des Saatguts zu jedem Zeitpunkt zwischen der Ernte und der Aussaat erfolgen. Üblicherweise wird Saatgut verwendet, das von der Pflanze getrennt und von Kolben, Schalen, Stängeln, Hülle, Wolle oder Fruchtfleisch befreit wurde. So kann zum Beispiel Saatgut verwendet werden, das geerntet, gereinigt und bis zu einem Feuchtigkeitsgehalt von unter 15 Gew.-% getrocknet wurde. Alternativ kann auch Saatgut verwendet werden, das nach dem Trocknen z.B. mit Wasser behandelt und dann erneut getrocknet wurde.

Im Allgemeinen muss bei der Behandlung des Saatguts darauf geachtet werden, dass die Menge des auf das Saatgut aufgebrachten erfmdungsgemäßen Mittels und/oder weiterer Zusatzstoffe so gewählt wird, dass die Keimung des Saatguts nicht beeinträchtigt bzw. die daraus hervorgehende Pflanze nicht geschädigt wird. Dies ist vor allem bei Wirkstoffen zu beachten, die in bestimmten Aufwandmengen phytotoxische Effekte zeigen können.

Die erfindungsgemäßen Mittel können unmittelbar aufgebracht werden, also ohne weitere Komponenten zu enthalten und ohne verdünnt worden zu sein. In der Regel ist es vorzuziehen, die Mittel in Form einer geeigneten Formulierung auf das Saatgut aufzubringen. Geeignete Formulierungen und Verfahren für die Saatgutbehandlung sind dem Fachmann bekannt und werden z.B. in den folgenden Dokumenten beschrieben: US 4,272,417 A, US 4,245,432 A, US 4,808,430 A, US 5,876,739 A, US 2003/0176428 A1, WO 2002/080675 A1, WO 2002/028186 A2.

Ein synergistischer Effekt liegt bei Fungiziden immer dann vor, wenn die fungizide Wirkung der Wirkstoffkombinationen größer ist als die zu erwartende Wirkung, die für eine gegebene Kombination von 2 oder 3 Wirkstoffen nach S.R. Colby ("Calculating Synergistic and Antagonistic Responses of Herbicide Combinations", Weeds 1967, 15, 20-22) wie folgt berechnet wird:

Wenn

- X den Wirkungsgrad beim Einsatz des Wirkstoffes A in einer Aufwandmenge von m g/ha bedeutet,
- Y den Wirkungsgrad beim Einsatz des Wirkstoffes B in einer Aufwandmenge von n g/ha bedeutet,
- $E_1$ den Wirkungsgrad beim Einsatz der Wirkstoffe A und B in Aufwandmengen von m und n g/ha bedeutet und
- $E_2$ den Wirkungsgrad beim Einsatz der Wirkstoffe A und B und C in Aufwandmengen von m und n und r g/ha bedeutet

dann ist

$$E_1 = X + Y - \frac{X \cdot Y}{100}$$

bzw.

$$E_2 = X + Y + Z - \frac{(X \cdot Y + X \cdot Z + Y \cdot Z)}{100} + \frac{X \cdot Y \cdot Z}{10\,000}$$

Dabei wird der Wirkungsgrad in % ermittelt. Es bedeutet 0 % ein Wirkungsgrad, der demjenigen der Kontrolle entspricht, während ein Wirkungsgrad von 100 % bedeutet, dass kein Befall beobachtet wird.

Ist die tatsächliche fungizide Wirkung größer als berechnet, so ist die Kombination in ihrer Wirkung überadditiv, d.h. es liegt ein synergistischer Effekt vor. In diesem Fall muss der tatsächlich beobachtete Wirkungsgrad größer sein als der aus der oben angeführten Formel errechnete Wert für den erwarteten Wirkungsgrad $E_1$.

Die Erfindung wird durch das folgende Beispiel veranschaulicht. (Die Erfindung ist jedoch nicht auf das Beispiel limitiert.)

**Beispiele**

*Gibberella zeae*-Test (in vitro) / Microtiterplatten

Der Microtest wird in Mikrotiterplatten mit Potato-Dextrose Broth (PDB) als flüssigem Versuchsmedium durchgeführt. Die Anwendung der Wirkstoffe erfolgt als technisches a.i., gelöst in Methanol. Zur Inokulation wird eine Sporensuspension von Gibberella zeae verwendet. Nach 5 Tagen Inkubation bei Dunkelheit und unter Schütteln (10 Hrz) wird die Lichtdurchlässigkeit in jeder gefüllten Kavität der Mikrotiterplatten mit Hilfe eines Spectrophotometers ermittelt.

Dabei bedeutet 0 % ein Wirkungsgrad, der dem Wachstum in den Kontrollen entspricht, während ein Wirkungsgrad von 100 % bedeutet, daß kein Pilzwachstum beobachtet wird.

Aus der nachfolgenden Tabelle geht eindeutig hervor, daß die gefundene Wirkung der erfindungsgemäßen Wirkstoffkombination größer ist als die berechnete, d.h., daß ein synergistischer Effekt vorliegt.

**Tabelle**

| Gibberella zeae -Test (in vitro) / Microtest | | | | |
|---|---|---|---|---|
| Wirkstoff<br>Bekannt: | | | Aufwandmenge an Wirkstoff in ppm | % Wirkungsgrad |
| *N*-[2-(1,3-Dimethylbutyl)phenyl]-5-fluor-1,3-dimethyl-1*H*-pyrazol-4-carboxamid & Metalaxyl | | | 0.6 | 7 |
| Trifloxystrobin | | | 0.3 | 40 |
| | | | | |
| Erfindungsgemäße Mischung: | | | | |
| | Mischungsverhältnis | Aufwandmenge an Wirkstoff ppm | in tatsächlicher Wirkungsgrad | Erwartungswert, berechnet mit Colby-Formel |
| *N*-[2-(1,3-Dimethylbutyl)phenyl]-5-fluor-1,3-dimethyl-1*H*-pyrazol-4-carboxamid & Metalaxyl + Trifloxystrobin | 2:1 | 0.6 + 0.3 | 61 | 44 |

*Pyrenophora teres*-Test (Gerste) / protektiv

Lösungsmittel: ***50*** Gewichtsteile ***N,N-Dimethylacetamid***

Emulgator: **1** Gewichtsteile Alkylarylpolyglykolether

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die gewünschte Konzentration oder verdünnt eine handelsübliche Formulierung von Wirkstoff oder Wirkstoffkombination mit Wasser auf die gewünschte Konzentration.

Zur Prüfung auf protektive Wirksamkeit werden junge Pflanzen mit der Wirkstoffzubereitung in der angegeben Aufwandmenge besprüht. Nach Antrocknen des Spritzbelages werden die Pflanzen mit einer Konidiensuspension von *Pyrenophora teres* besprüht. Die Pflanzen verbleiben 48 Stunden bei 20°C und 100 % relativer Luftfeuchtigkeit in einer Inkubationskabine.

Die Pflanzen werden dann in einem Gewächshaus bei einer Temperatur von ca. 20°C und relativen Luftfeuchtigkeit von ca. 80 % aufgestellt.

10 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, daß kein Befall beobachtet wird.

Tabelle

| *Pyrenophora teres-Test* (Gerste) / protektiv | | | |
|---|---|---|---|
| Wirkstoffe | Aufwandmenge an Wirkstoff in g/ha | Wirkungsgrad in % | |
| | | gef.* | ber.** |
| (I) *N*-[2-(1,3-Dimethylbutyl)phenyl]-5-fluor-1,3-dimethyl-1*H*-pyrazol-4-carboxamid | 62,5 | 67 | |
| (II) Trifloxystrobin | 62,5 | 78 | |
| (III) Metalaxyl | 125 | 22 | |
| (I) + (11) 1:1 | 62,5 + 62,5 | 94 | 93 |
| (**I**) + (III) 1:2 | 62,5 + 125 | 89 | 74 |
| (II) + 1:2 | 62,5 + 125 | 94 | 83 |
| (I) + (II) + (III) 1:1:2 | 62,5 + 62,5 + 125 | 100 | 94 |
| * gef. = gefundene Wirkung<br>** ber. = nach der Colby-Formel berechnete Wirkung (III) | | | |

**Patentansprüche**

**1.** Wirkstoffkombinationen enthaltend

(1) *N*-[2-(1,3-Dimethylbutyl)phenyl]-5-fluor-1,3-dimethyl-1*H*-pyrazol-4-carboxamid oder dessen Salze, und
(2) Metalaxyl oder Metalaxyl-M
und
(3) Trifloxystrobin

**2.** Wirkstoffkombinationen gemäß Anspruch 1, wobei auf 1 Gewichtsteil an Strobilurin (3) 0,005 - 500 Gewichtsteile an Acylalanin (2) und 0,005 - 500 Gewichtsteile an *N*-[2-(1,3-Dimethylbutyl)phenyl]-5-fluor-1,3-dimethyl-1*H*-pyrazol-4-carboxamid eingesetzt werden.

**3.** Wirkstoffkombinationen gemäß Ansprüchen 1 oder 2, welche fungizid wirksam sind.

**4.** Mittel umfassend die Wirkstoffkombinationen gemäß einem der Ansprüche 1 bis 3.

**5.** Mittel gemäß Anspruch 4 enthaltend weitere Hilfsmittel, Solventien, Trägerstoffe, oberflächenaktive Stoffe oder Streckmittel.

**6.** Verfahren zur Bekämpfung von phytopathogenen Pilzen im Pflanzenschutz oder im Materialschutz, **dadurch gekennzeichnet, dass** man das Mittel gemäß Anspruch 4 oder 5 auf das Saatgut, die Pflanze, Früchte von Pflanzen oder den Boden, auf dem die Pflanze wächst oder wachsen soll, ausbringt

**7.** Verfahren gemäß Anspruch 6, **dadurch gekennzeichnet, dass** man die Wirkstoffe (1), (2) und (3) gleichzeitig oder nacheinander ausbringt.

**8.** Verfahren gemäß Anspruch 6 oder 7, **dadurch gekennzeichnet, dass** man bei der Behandlung von Blättern von 0,1 bis 10 000 g/ha, bei der Saatgutbehandlung von 0,01 bis 200 g pro 100 kg Saatgut und bei der Bodenbehandlung von 0,1 bis 10 000 g/ha einsetzt.

**9.** Verwendung von Wirkstoffkombinationen gemäß Ansprüchen 1 bis 3 oder von Mitteln gemäß Anspruch 4 oder 5 zur Bekämpfung von unerwünschten phytopathogenen Pilzen im Pflanzenschutz oder im Materialschutz.

**10.** Verwendung von Wirkstoffkombinationen gemäß Ansprüchen 1 bis 3 oder von Mitteln gemäß Anspruch 4 oder 5 zur Behandlung von Saatgut.

**11.** Verwendung von Wirkstoffkombinationen gemäß Ansprüchen 1 bis 3 oder von Mitteln gemäß Anspruch 4 oder 5 zur Behandlung von transgenen Pflanzen.

**12.** Saatgut, welches mit Wirkstoffkombination gemäß Ansprüchen 1 bis 3 oder mit Mitteln gemäß Anspruch 4 oder 5 behandelt wurde.

## Claims

**1.** Active compound combinations, comprising

(1) *N*-[2-(1,3-dimethylbutyl)phenyl]-5-fluoro-1,3-dimethyl-1*H*-pyrazole-4-carboxamide or salts thereof, and
(2) metalaxyl or metalaxyl-M
and
(3) trifloxystrobin.

**2.** Active compound combinations according to Claim 1, where 0.005 - 500 parts by weight of acylalanine (2) and 0.005 - 500 parts by weight of *N*-[2-(1,3-dimethylbutyl)phenyl]-5-fluoro-1,3-dimethyl-1*H*-pyrazole-4-carboxamide are used per part by weight of strobilurin (3).

**3.** Active compound combinations according to Claims 1 or 2 which are fungicidally active.

**4.** Compositions comprising active compound combinations according to one of Claims 1 to 3.

**5.** Compositions according to Claim 4, comprising further auxiliaries, solvents, carriers, surfactants or extenders.

**6.** Method for controlling phytopathogenic fungi in crop protection or in the protection of materials, **characterized in that** compositions according to Claim 4 or 5 are applied to the seed, the plant, to fruits of plants or to the soil on which the plant grows or is supposed to grow.

**7.** Method according to Claim 6, **characterized in that** the active compounds (1), (2) and (3) are applied simultaneously or in succession.

**8.** Method according to Claim 6 or 7, **characterized in that** in the treatment of leaves from 0.1 to 10 000 g/ha are used, in the treatment of seed from 0.01 to 200 g per 100 kg of seed are used and in the soil treatment from 0.1 to 10 000 g/ha are used.

**9.** Use of active compound combinations according to any of Claims 1 to 3 or of compositions according to Claim 4 or 5 for controlling unwanted phytopathogenic fungi in crop protection or in the protection of materials.

**10.** Use of active compound combinations according to any of Claims 1 to 3 or of compositions according to Claim 4 or 5 for treating seed.

**11.** Use of active compound combinations according to any of Claims 1 to 3 or of compositions according to Claim 4 or 5 for treating transgenic plants.

**12.** Seed treated with active compound combinations according to any of Claims 1 to 3 or with compositions according to Claim 4 or 5.

## Revendications

**1.** Combinaisons de matières actives contenant :

(1) du *N*-[2-(1,3-diméthylbutyl)phényl]-5-fluoro-1,3-diméthyl-1*H*-pyrazole-4-carboxamide ou ses sels, et
(2) le métalaxyl ou le métalaxyl-M et (3) la trifloxystrobine.

**2.** Combinaisons de matières actives selon la revendication 1, dans lesquelles on utilise, pour une partie en poids de

la strobilurine (3), 0,005-500 parties en poids de l'acylalanine (2) et 0,005-500 parties en poids du *N*-[2-(1,3-diméthylbutyl)phényl]-5-fluoro-1,3-diméthyl-1*H*-pyrazole-4-carboxamide.

**3.** Combinaisons de matières actives selon les revendications 1 ou 2, qui ont une activité fongicide.

**4.** Produit contenant des combinaisons de matières actives selon les revendications 1 à 3.

**5.** Produit selon la revendication 4, contenant des adjuvants, solvants, supports, substances tensioactives ou diluants supplémentaires.

**6.** Procédé de maîtrise des champignons phytopathogènes pour la protection des plantes ou des matériaux, **caractérisé en ce qu'**on applique un produit selon la revendication 4 ou 5 sur la semence, la plante, les fruits de plantes ou le sol sur lequel la plante croît ou doit croître.

**7.** Procédé selon la revendication 6, **caractérisé en ce qu'**on applique les matières actives (1), (2) et (3) simultanément ou successivement.

**8.** Procédé selon la revendication 6 ou 7, **caractérisé en ce qu'**on utilise lors du traitement des feuilles de 0,1 à 10 000 g/ha, lors du traitement des semences de 0,01 à 200 g par 100 kg de semence, et lors du traitement du sol de 0,1 à 10 000 g/ha.

**9.** Utilisation de combinaisons de matières actives selon les revendications 1 à 3 ou de produits selon la revendication 4 ou 5 pour maîtriser des champignons phytopathogènes indésirables en protection des plantes ou des matériaux.

**10.** Utilisation de combinaisons de matières actives selon les revendications 1 à 3 ou de produits selon la revendication 4 ou 5 pour le traitement de semences.

**11.** Utilisation de combinaisons de matières actives selon les revendications 1 à 3 ou de produits selon la revendication 4 ou 5 pour le traitement de plantes transgéniques.

**12.** Semence, qui a été traitée par une combinaison de matières actives selon les revendications 1 à 3 ou par des produits selon la revendication 4 ou 5.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2005041653 A
- WO 03045146 A
- WO 9858544 A
- DE 2903612 A
- DE 2513732 A
- DE 2515091 A
- WO 9601559 A
- EP 0382375 A
- DE 19602095 A
- DE 19646407 A
- EP 0712396 B
- EP 0460575 A
- EP 0569384 A
- EP 0596254 A
- DE 19539324 A
- WO 9823155 A
- EP 0253213 A
- EP 0398692 A
- EP 0278595 A
- DE 4423612 A
- US 4272417 A
- US 4245432 A
- US 4808430 A
- US 5876739 A
- US 20030176428 A1
- WO 2002080675 A1
- WO 2002028186 A2

### In der Beschreibung aufgeführte Nicht-Patentliteratur

- The Pesticide Manual. 2003, 468, , 632, , 1007
- **S.R. COLBY.** Calculating Synergistic and Antagonistic Responses of Herbicide Combinations. *Weeds,* 1967, vol. 15, 20-22